# EUROPEAN PATENT SPECIFICATION

(11) **EP 2 871 786 B1**
(45) Date of publication and mention of the grant of the patent: **22.05.2019**
(21) Application number: 13829499.6
(22) Date of filing: 13.08.2013
(51) Int. Cl.: H04B 10/075, H04J 3/14

(54) **SINGLE-OPTICAL FIBRE FAULT HANDLING METHOD AND DEVICE**
VERFAHREN UND VORRICHTUNG ZUR HANDHABUNG VON EINZELGLASFASERFEHLERN
PROCÉDÉ ET DISPOSITIF DE TRAITEMENT DE DÉFAUT DE FIBRE OPTIQUE UNIQUE

(30) Priority: 17.08.2012 CN 201210293448
(43) Date of publication of application: 13.05.2015
(73) Proprietor: ZTE Corporation, Shenzhen, Guangdong 518057 (CN)
(72) Inventor: PENG, Yuanyuan, Shenzhen Guangdong 518057 (CN); JIAO, Lin, Shenzhen Guangdong 518057 (CN)
(74) Representative: AWA Sweden AB
(86) International application number: PCT/CN2013/081332
(87) International publication number: WO 2014/026585

(56) References cited:
- CN-A- 1 913 399
- CN-A- 102 035 680
- CN-A- 102 035 680
- CN-A- 102 075 415
- CN-A- 102 075 415
- CN-A- 102 325 037
- CN-A- 102 801 466
- CN-A- 103 052 106
- "Protection_Switching_v0.6", ITU-T DRAFT ; STUDY PERIOD 2001-2004, INTERNATIONAL TELECOMMUNICATION UNION, GENEVA ; CH, vol. Study Group 15, 28 May 2004 (2004-05-28), pages 1-13, XP017505234, [retrieved on 2004-05-28]

## Description

### Technical Field

The present invention relates to the field of communication technology, and more particularly, to a method and apparatus for processing single-optical fibre fault.

### Background of the Related Art

Linear multiplex section protection is defined in the ITU-T (International Telecommunication Union Telecommunication Standardization Sector) G.841 to provide protection for the multiplex section layer in the SDH (Synchronous Digital Hierarchy) network, and it is a dedicated or shared protection mechanism and suitable for point-to-point physical networks. One multiplex section can be used to protect a certain number of working multiplex sections, but it cannot provide protection for node fault, and the multiplex sections can be operated in a single end or both ends, and in addition, additional services which do not need protection can also be launched when the protection is in the idle state.

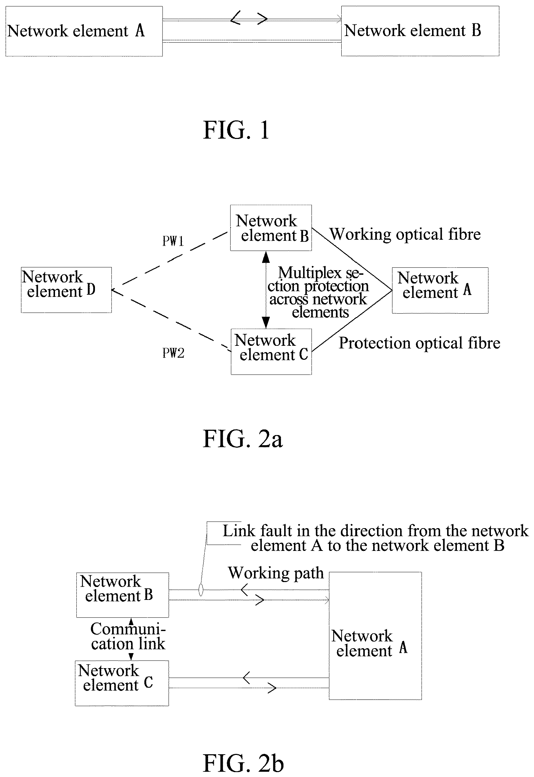

FIG. 1 shows a traditional multiplex section protection group of single node, wherein a multiplex section protection group of single node is deployed between node A and node B to protect the link between the node A and the node B. When a working multiplex section has faults, the node which detects the link faults performs a protection switching protocol operation, interacts with the opposite-end node through the K-byte information, triggers the protection switching action of the multiplex section protection group and switches the traffic to the protection multiplex section, so as to implement the protection of the link between the node A and the node B.

With the development of network technology, the requirement for the scene of the multiplex section protection across network elements is proposed in practical applications. FIG. 2a illustrates a protection scene composed of two network elements, wherein there is a communication link between node B and node C to realize the normal communication of the two nodes, and the two different network elements, the node B and the node C, constitute a protection group across network elements to implement the protection function of the communication link between the node C and the single node A for the communication link between the node B and the node A.

One node in the multiplex section protection group across network elements which performs protocol decisions and exchanges the K-byte with the opposite-end node of the protection group, is referred to as decision node herein, and other network elements are called non-decision nodes. There is usually one and only one decision node for a protection group across network elements, and other nodes are non-decision nodes. Under normal circumstances, it needs to establish a communication link with the decision node in each non-decision node, and the decision node needs to use the communication link to notify the non-decision nodes of the decision result to perform, and meanwhile, the non-decision nodes need to notify the latest state to the decision node to participate in the decision-making. Once a communication link fails, the connection between the decision node and the non-decision node is also interrupted.

The document CN102035680A discloses a cross-equipment link protection method and a cross-equipment protection system. The system comprises a protective group formed by a master equipment in which an operating link is positioned and spare equipment in which a protective link is positioned, wherein the master equipment is used for sending switching decision information to the spare equipment; and the spare equipment is used for making decision according to the received switching decision information and sending synchronous notification to the master equipment according to a switch result of the decision.

The document CN102075415 discloses a multi-element network and cross network element complex section protection switching method that A network element (B or C) configured with cross network element complex section protection and a network element (D) configured with pseudowire redundancy group protection are adopted in the method, wherein when a working link or a protection link is switched, the network element configured with the cross network element complex section protection encapsulates a switching state as message and sends the message to the network element configured with the pseudowire redundancy group protection; and the network element configured with the pseudowire redundancy group protection resolves the received message, then takes out the switching state, and executes the switching of the pseudowire redundancy group protection side according to the decision of the switching state.

### Summary of the Invention

When a communication link fails, a multiplex section protection group across network elements where the communication link is located cannot communicate properly, if a fault occurs in a working multiplex section at this time while the non-decision nodes cannot notify the fault information to the decision node, then the multiplex section protection group across devices cannot initially respond to the fault or perform a protection switching. If the opposite-end protection group does not have the switching action notified by the K-byte information, the protection failure and communication interruption will be caused.

In addition, since one optical fibre is composed of two optical fibres: transmitting and receiving optical fibres, when a single optical fibre fails, the adjacent port only has one end which can quickly perceive the fault due to the transmission characteristics of the optical fibre. In this case, when the scene where a single optical fibre fails occurs, it results in the scene where the traffic is interrupted and the protection of the protection group cannot be effective.

Take the protection group across network elements composed of two network elements in FIG. 2a for example, wherein the multiplex section between the node A and the node B is a working section, and the link between the node C and the node A is a protection section, and the node C is the decision node in the protection group across network elements in which the node B and the node C constitute the network. If the communication link between the node B and the node C has faults and the working multiplex section between the node A and the node B also has the fault condition of single optical fibre shown in FIG. 2b, firstly, the node A cannot perceive the link fault and cannot produce any protection switching action, and secondly, the node B as the packet receiving end can perceive the fault but does not have the decision-making capacity, and it needs to notify the fault condition to the decision node C to trigger a decision, and since the communication link between the node B and the node C fails at this time and the communication is interrupted, it results in that the fault condition cannot be notified to the decision node C. In such a scenario, the protection group composed of the nodes B and C cannot produce any protection switching action, and the traffic switching is interrupted.

The problem of traffic interruption when a single optical fibre fails in a communication link fault is solved by a method according to claim1 and apparatus according to claim 6 for processing single-optical fibre fault.. Further improvements and embodiments are provided in the dependent claims.

Also provided is a method for processing single-optical fibre fault provided in an embodiment of the present invention, comprises:
when a non-decision node in a multiplex section protection group across network elements detects alarm information which triggers switching of a multiplex section protection group, determining whether a state of a communication link between a non-decision node and a decision node in the multiplex section protection group across network elements is normal or not, if the communication link is abnormal, mapping the alarm information to a transmitting optical fibre end which works as an opposite-end protection group.

Preferably, the method further comprises:
after detecting a fault in a protected multiplex section in accordance with the alarm information, the opposite-end protection group triggering the decision node in the multiplex section protection group across network elements to perform a protection switching protocol calculation.

Preferably, the method further comprises:
when determining that the state of the communication link with the decision node is normal, the non-decision node which detects the alarm information notifying the decision node of the alarm information;
when receiving the alarm information, the decision node performing a protection switching protocol operation.

Preferably, the method further comprises:
when detecting the alarm information which triggers the switching of the multiplex section protection group, the decision node in the multiplex section protection group across network elements performing the protection switching protocol operation and triggering a protection switching action of the multiplex section protection group.

Preferably, each node within the multiplex section protection group across network elements detects the alarm information by detecting overhead field information in a frame structure sent by an opposite end.

Also provided is an apparatus for processing single-optical fibre fault provided in an embodiment of the present invention is applied to a node in a multiplex section protection group across network elements, and the apparatus comprises:
an alarm information detecting unit, configured to detect alarm information which triggers switching of a multiplex section protection group;
a role judging unit, configured to: determine whether a present node is a decision node or non-decision node in the multiplex section protection group across network elements when detecting the alarm information which triggers the switching of the multiplex section protection group; and
a fault processing unit, configured to: when the role judging unit determines that the present node is a non-decision node, determine whether a state of a communication link between the present node and the decision node in the multiplex section protection group across network elements is normal or not, if the communication link is abnormal, map the alarm information to a transmitting optical fibre end which works as an opposite-end protection group.

Preferably, the fault processing unit is further configured to: when the role judging unit determines that the present node is a decision node, then perform a protection switching protocol operation, interact with an opposite-end node through K-byte information in a frame structure, and trigger a protection switching action of the multiplex section protection group.

Preferably, the fault processing unit is further configured to: when the role judging unit determines that the present node is a non-decision node and the state of the communication link between the present node and the decision node is normal, then notify the decision node of the alarm information.

Preferably, the fault processing unit is further configured to: when receiving the alarm information sent by the opposite-end protection group, after detecting a fault in a protected multiplex section according to the alarm information, trigger an opposite end to perform a protection switching protocol calculation.

Preferably, the alarm information detecting unit is configured to detect the alarm information by detecting overhead field information in a frame structure sent by the opposite end.

The embodiment of the present invention provides a protection switching method used in the single-optical fibre fault in the multiplex section protection group across network elements, to achieve the protection switching in the case of the communication link across network elements having faults, thus ensuring the quality of the multiplex section protection across network elements.

### Brief Description of the Drawings

FIG. 1 is a schematic diagram of networking of a multiplex section protection group of single network element;
FIG. 2a is a schematic diagram of networking of a multiplex section protection group across network elements;
FIG. 2b is a schematic diagram of single optical fibre fault in a multiplex section protection group across network elements;
FIG. 3 is a flow chart of a single-optical fibre fault processing method in accordance with an embodiment of the present invention;
FIG. 4 is a flow chart of protection processing across network elements in accordance with an embodiment of the present invention;
FIG. 5 is a schematic diagram of networking of a multiplex section protection group across network elements and a multiplex section protection group of single network element in an application example of the present invention;
FIG. 6 is a schematic diagram of networking of a multiplex section protection group across network elements and another multiplex section protection group across network elements in accordance with an application example of the present invention;
FIG. 7 is a schematic diagram of the structure of a single-optical fibre fault processing apparatus in accordance with an embodiment of the present invention.

### Preferred Embodiments of the Invention

Hereinafter in conjunction with the accompanying drawings, the embodiments of the present invention will be described in detail. It should be noted that, in the case of no conflict, the embodiments of the present application and features in the embodiments may be arbitrarily combined with each other.

The present embodiment provides a single optical fibre fault processing method, mainly using the following scheme:
the non-decision node which detects that the link corresponding to the protection port fails judges the state of the communication link with the decision node, maps the corresponding alarm information to the transmitting end of the single transmitting optical fibre in the case that the communication link fails, and forces the opposite end to detect the fault.

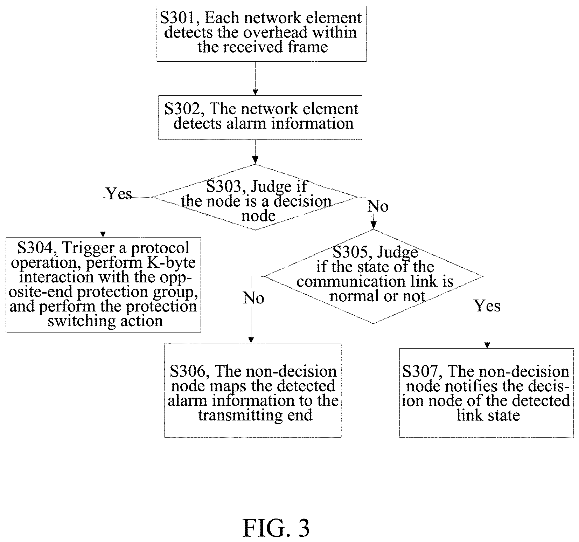

Referring to FIG. 3, the single optical fibre fault processing method provided in the embodiment of the present invention and used in the multiplex section protection system across network elements comprises the following steps:
S301, each network element in the multiplex section protection group across network elements detects the overhead field within the received frame structure;
S302, when the network element in the multiplex section protection group across network elements detects the alarm information which triggers the switching of a multiplex section protection group, proceed to step S303;
S303, the role of the node which detects the alarm information in the multiplex section protection group across network elements is judged, and if the node is a decision node, proceed to step S304, and if the node is a non-decision node, proceed to step S305;
S304, in the case that the node which detects the link fault is the decision node in the multiplex section protection group across network elements, the link fault participates in the protocol calculation, and a protection switching action is performed;
S305, the non-decision node which detects the link fault needs to judge the state of the communication link with the decision node, if the communication link with the decision node is abnormal, proceed to step S306, if the communication link with the decision node is normal, proceed to step S307;
S306, in the case that the communication link between a non-decision node and the decision node is down, the detected alarm information which can trigger the switching of a multiplex section protection group is mapped to the transmitting optical fibre end, such as inserting the alarm information and other actions, so that the transmitting optical fibre end as the opposite end of the protection group can detect the link fault and perform the protection switching action;
S307, the non-decision node only needs to notify the decision node of the corresponding alarm information to perform a protocol calculation.

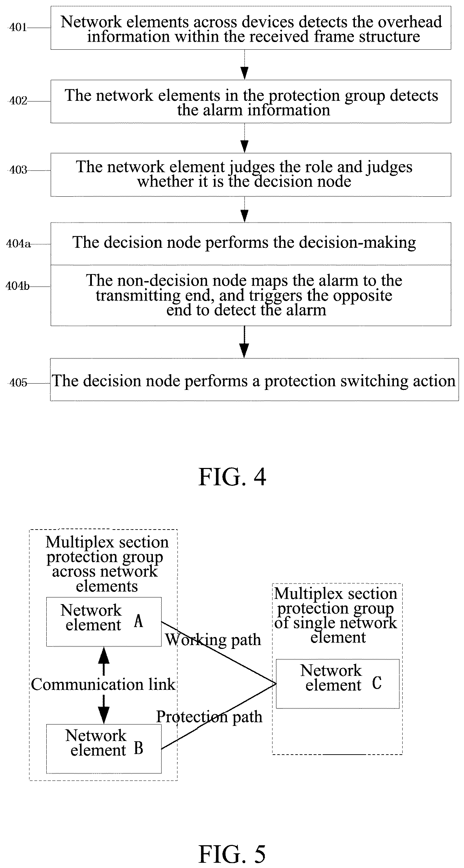

FIG. 4 is a flow chart of a single optical fibre fault in a multiplex section across network elements in accordance with an embodiment of the present invention, comprising the following main steps:
step 401, each network element in the multiplex section protection group across network elements detects the overhead field information within the frame structure sent by the opposite side;
step 402, the network elements in the multiplex section protection group across network elements detects the alarm information;
step 403, the node which detects the fault needs to judge its role in the protection group and judge whether it is the decision node in the protection group or not;
step 404-a, if the node is a non-decision node in the multiplex section protection group across network elements, it needs to judge the state of the link between it and the decision node in the multiplex section protection group across network elements.
Step 404-b, the communication link between the node and the decision node in the multiplex section protection group across network elements is in the abnormal state, and the non-decision node in the multiplex section protection group across network elements maps the detected alarm information, which can trigger switching of a multiplex section protection group, to the transmitting multiplex section, so that the opposite end detects the same alarm information.
step 405, the decision node in the multiplex section protection group across network elements detects a link fault, performs a protocol operation, and triggers a protection switching action.

For step 404, after the opposite-end protection group detects a fault in the protected multiplex section, it triggers the opposite-end protocol protection group to perform a protocol calculation, and in accordance with the provisions of G841 protocol, as long as one end of the two-end protection groups detects a link fault, the switching will be carried out, and the interaction is performed through the K1 and K2 bytes in the frame structure, thus completing the switching action. Thus, even if the multiplex section protection group across network elements does not receive the link fault information detected by the non-decision node, the information of K1 and K2 bytes sent by the opposite end triggers a switching action to ensure the normal link traffic.

In the following, in combination with the specific application examples, the embodiments of the present invention will be described in detail.

FIG. 5 shows a schematic diagram of a protection network composed of the multiplex section protection group across network elements having two network elements and the multiplex section protection group of single network element, wherein the nodes A and B constitute the multiplex section protection group across network elements, wherein the node B is the decision node and the node A is a non-decision node, and there is a communication link between the nodes A and B; the multiplex section protection group of single network element is configured in the node C.

Under normal circumstances, the communication link between the node A and the node B is normal, and when the node A detects that the link between the nodes A and C fails, the node A notifies the decision node B of the alarm information, and the G841 protocol is operated in the node B, the switching information is exchanged through the K1 and K2 bytes between the protection group of single node in the same opposite end to complete the protection switching action. Similarly, if the node C firstly detects the link fault between the nodes A and C, it also sends the K1 and K2 bytes and completes the switching action together with the protection group across network elements in the opposite end.

When the communication link between the nodes A and B fails, the node A detects a link fault but cannot notify the decision node B through the communication link between the nodes A and B, and the protection group across network elements can not initiate a switching action, and if the node C in the opposite end cannot detect the fault either, the traffic will be interrupted, in this case, the node A can map the detected fault to the transmitting end and force the node C to perceive the fault and trigger a protection switching.

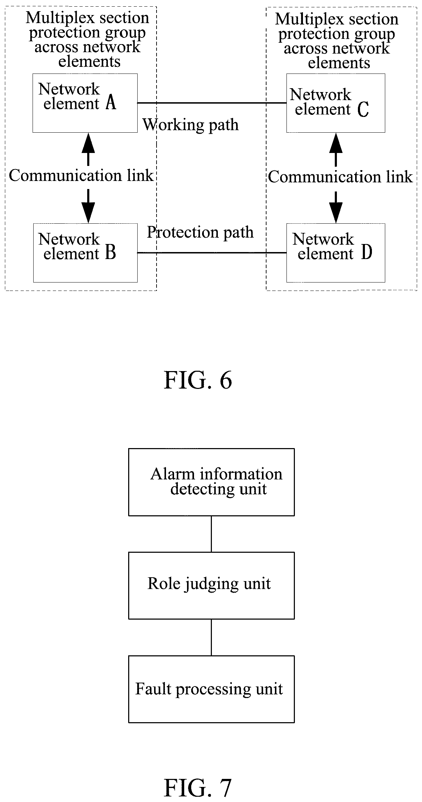

FIG. 6 shows the case of two protection groups across network elements, either of which has two network elements, interconnected with each other, and when the communication link in the one-end protection group fails and the alarm is detected above the multiplex section layer of the protection port in the non-decision node, it needs to map the alarm information to the transmitting end, so as to ensure that the opposite-end protection group can perceive the interruption of traffic and trigger a protection switching action.

In summary, the embodiment of the present invention proposes a protection switching method used for single-optical fibre fault in the multiplex section protection group across network elements, to achieve the protection switching in the case that the communication link across network elements fails, so as to ensure the quality of the multiplex section protection across network elements.

Furthermore, the embodiment of the present invention further provides an apparatus for processing single optical fibre fault to be applied in the multiplex section protection system across network elements, and as shown in FIG. 7, the apparatus comprises:
an alarm information detecting unit, configured to detect alarm information which triggers switching of multiplex section protection group;
a role judging unit, configured to, when detecting the alarm information which triggers switching of the multiplex section protection group, determine whether the present node is a decision node or non-decision node in the multiplex section protection group across network elements;
a fault processing unit, configured to: when the role judging unit determines that the present node is a non-decision node, determine whether the state of the communication link with the decision node is normal or not, if the communication link is abnormal, then map the alarm information to the transmitting optical fibre end which works as the opposite-end protection group.

Preferably, the fault processing unit is configured to: after the role judging unit determines that the present node is the decision node, perform a protection switching protocol operation, interact with the opposite-end node through the K-byte information in the frame structure and trigger the protection switching action of the multiplex section protection group.

Preferably, the fault processing unit is configured to: when the role judging unit determines that the present node is a non-decision node and the state of the communication link between the present node and the decision node is normal, notify the decision node of the alarm information.

Preferably, the fault processing unit is further configured to: upon receiving the alarm information sent by the opposite-end protection group, and detect the fault in the protected multiplex section according to the alarm information, then trigger the opposite end to perform a protection switching protocol calculation.

Preferably, the alarm information detecting unit is configured to detect the alarm information by detecting the overhead field information in the frame structure sent by the opposite end.

The above description is only preferred embodiments of the present invention and not intended to limit the present invention.

Obviously, those skilled in the art can understand that each abovementioned module or step of the present invention may be implemented with general-purpose computing apparatuses, and they can be integrated on a single computing apparatus or distributed in a network composed of a plurality of computing apparatuses, alternatively, they can be implemented by using program codes executable by computing apparatuses, therefore, they can be stored in the storage means and executed by the computing apparatuses, in some cases, the steps shown or described herein may be executed in a different order, or they are made into respective integrated circuit modules, or some of the modules or steps are produced into a single integrated circuit module for implementation. Therefore, the present invention is not limited to any specific combination of hardware and software.

### Industrial Applicability

The embodiment of the present invention provides a protection switching method used in a single optical fibre fault in a multiplex section protection group across network elements, to achieve the protection switching in the case of the communication link fault across network elements, thus ensuring the quality of the multiplex section protection across network elements.

## Claims

1. A method for processing single-optical fibre fault in a Synchronous Digital Hierarchy network, an optical fibre comprising a transmitting optical fibre and a receiving optical fibre, **characterized by** comprising:
when a non-decision node (B) in a multiplex section protection group across network elements detects alarm information in the receiving optical fibre which triggers switching of a multiplex section protection group (S302), determining whether a state of a communication link between the non-decision node (B) and a decision node (C) in the multiplex section protection group across network elements is normal or not (S305), if the communication link is abnormal, mapping the alarm information to a transmitting optical fibre end (A) which works as an opposite-end protection group (S306), through the transmitting optical fibre;
wherein the decision node in the multiplex section protection group across network elements is a node that performs protocol decisions and exchanges K-byte with the opposite-end protection group, and other network elements are called non-decision nodes.

2. The method of claim 1, wherein the method further comprises:
after detecting a fault in a protected multiplex section in accordance with the alarm information, the opposite-end protection group triggering the decision node in the multiplex section protection group across network elements to perform a protection switching protocol calculation.

3. The method of claim 1, wherein the method further comprises:
when the non-decision node which detects the alarm information determines that the state of the communication link with the decision node is normal, notifying the decision node of the alarm information (S307);
when receiving the alarm information, the decision node performing a protection switching protocol operation.

4. The method of claim 1, wherein the method further comprises:
when detecting the alarm information which triggers switching of the multiplex section protection group, the decision node in the multiplex section protection group across network elements performing a protection switching protocol operation and triggering a protection switching action of the multiplex section protection group.

5. The method of claim 1 or 3 or 4, wherein
each node within the multiplex section protection group across network elements detects the alarm information by detecting overhead field information in a frame structure sent by an opposite end.

6. An apparatus for processing single-optical fibre fault in a Synchronous Digital Hierarchy network, an optical fibre comrpising a transmitting optical fibre and a receiving optical fibre, applied to a node (B) in a multiplex section protection group across network elements, **characterized in that** the apparatus comprises:
an alarm information detecting unit, configured to detect alarm information in the receiving optical fibre which triggers switching of a multiplex section protection group;
a role judging unit, configured to: determine whether a present node (B) is a decision node or non-decision node in the multiplex section protection group across network elements when detecting the alarm information which triggers switching of the multiplex section protection group; and
a fault processing unit, configured to: when the role judging unit determines that the present node (B) is the non-decision node, determine whether a state of a communication link between the present node (B) and the decision node (C) in the multiplex section protection group across network elements is normal or not, if the communication link is abnormal, map the alarm information to a transmitting optical fibre end (B) which works as an opposite-end protection group, through the transmitting optical fibre;
wherein the decision node in the multiplex section protection group across network elements is a node that performs protocol decisions and exchanges K-byte with the opposite-end protection group, and other network elements are called non-decision nodes.

7. The apparatus of claim 6, wherein
the fault processing unit is further configured to: when the role judging unit determines that the present node is the decision node, then perform a protection switching protocol operation, interact with an opposite-end node through K-byte information in a frame structure, and trigger a protection switching action of the multiplex section protection group.

8. The apparatus of claim 6, wherein
the fault processing unit is further configured to: when the role judging unit determines that the present node is the non-decision node and the state of the communication link between the present node and the decision node is normal, then notify the decision node of the alarm information.

9. The apparatus of claim 6 or 7 or 8, wherein
the fault processing unit is further configured to: when receiving alarm information sent by the opposite-end protection group, after detecting a fault in a protected multiplex section according to the alarm information, trigger an opposite end to perform a protection switching protocol calculation.

10. The apparatus of claim 6 or 7 or 8, wherein
the alarm information detecting unit is configured to detect the alarm information by detecting overhead field information in a frame structure sent by an opposite end.

## Patentansprüche

1. Verfahren zur Verarbeitung einer Einzeloptofaser-Störung in einem Synchronous Digital Hierarchy-Netzwerk, wobei eine optische Faser eine optische Sendefaser und eine optische Empfangsfaser umfasst, **dadurch gekennzeichnet, dass** es Folgendes umfasst:
wenn ein Nicht-Entscheidungsknoten (B) in einer Multiplexsektionsschutzgruppe über Netzwerk-Elemente hinweg Alarminformationen in der optischen Empfangsfaser detektiert, die das Schalten einer Multiplexsektionsschutzgruppe auslösen (S302), Bestimmen, ob ein Zustand einer Kommunikationsverbindung zwischen dem Nicht-Entscheidungsknoten (B) und einem Entscheidungsknoten (C) in der Multiplexsektionsschutzgruppe über Netzwerk-Elemente hinweg normal ist oder nicht (S305); falls die Kommunikationsverbindung abnormal ist, Abbilden der Alarminformationen auf ein Ende (A) einer optischen Sendefaser, das als eine Schutzgruppe am entgegengesetzten Ende fungiert (S306), durch die optische Sendefaser;
wobei der Entscheidungsknoten in der Multiplexsektionsschutzgruppe über Netzwerk-Elemente hinweg ein Knoten ist, der Protokollentscheidungen ausführt und K-Byte mit der Schutzgruppe am entgegengesetzten Ende austauscht, und andere Netzwerk-Elemente als Nicht-Entscheidungsknoten bezeichnet werden.

2. Verfahren nach Anspruch 1, wobei das Verfahren des Weiteren Folgendes umfasst:
nach dem Detektieren einer Störung in einer geschützten Multiplexsektion gemäß den Alarminformationen veranlasst die Schutzgruppe am entgegengesetzten Ende den Entscheidungsknoten in der Multiplexsektionsschutzgruppe über Netzwerk-Elemente hinweg, eine Schutzumschaltprotokollberechnung auszuführen.

3. Verfahren nach Anspruch 1, wobei das Verfahren des Weiteren Folgendes umfasst:
wenn der Nicht-Entscheidungsknoten, der die Alarminformationen detektiert, bestimmt, dass der Zustand der Kommunikationsverbindung mit dem Entscheidungsknoten normal ist, Benachrichtigen des Entscheidungsknotens über die Alarminformationen (S307);
wenn die Alarminformationen empfangen werden, so führt der Entscheidungsknoten eine Schutzumschaltprotokolloperation aus.

4. Verfahren nach Anspruch 1, wobei das Verfahren des Weiteren Folgendes umfasst:
wenn die Alarminformationen, die das Schalten der Multiplexsektionsschutzgruppe veranlassen, detektiert werden, so führt der Entscheidungsknoten in der Multiplexsektionsschutzgruppe über Netzwerk-Elemente hinweg eine Schutzumschaltprotokolloperation aus und veranlasst eine Schutzschaltungsaktion der Multiplexsektionsschutzgruppe.

5. Verfahren nach Anspruch 1 oder 3 oder 4, wobei jeder Knoten innerhalb der Multiplexsektionsschutzgruppe über Netzwerk-Elemente hinweg die Alarminformationen durch Detektieren von Verwaltungsdatenfeld-Informationen in einer durch ein entgegengesetztes Ende gesendeten Frame-Struktur detektiert.

6. Vorrichtung zur Verarbeitung einer Einzeloptofaser-Störung in einem Synchronous Digital Hierarchy-Netzwerk, wobei eine optische Faser eine optische Sendefaser und eine optische Empfangsfaser umfasst, die auf einen Knoten (B) in einer Multiplexsektionsschutzgruppe über Netzwerk-Elemente hinweg angewendet wird, **dadurch gekennzeichnet, dass** die Vorrichtung Folgendes umfasst:
eine Alarminformations-Detektionseinheit, die dafür konfiguriert ist, Alarminformationen in der optischen Empfangsfaser zu detektieren, die das Schalten einer Multiplexsektionsschutzgruppe veranlassen;
eine Rollenbeurteilungseinheit, die für Folgendes konfiguriert ist: Bestimmen, ob ein momentaner Knoten (B) ein Entscheidungsknoten oder ein Nicht-Entscheidungsknoten in der Multiplexsektionsschutzgruppe über Netzwerk-Elemente hinweg ist, wenn die Alarminformationen detektiert werden, die das Schalten der Multiplexsektionsschutzgruppe veranlassen; und
eine Störungsverarbeitungseinheit, die für Folgendes konfiguriert ist: wenn die Rollenbeurteilungseinheit bestimmt, dass der momentane Knoten (B) der Nicht-Entscheidungsknoten ist, Bestimmen, ob ein Zustand einer Kommunikationsverbindung zwischen dem momentanen Knoten (B) und dem Entscheidungsknoten (C) in der Multiplexsektionsschutzgruppe über Netzwerk-Elemente hinweg normal ist oder nicht; falls die Kommunikationsverbindung abnormal ist, Abbilden der Alarminformationen auf ein Ende einer optischen Sendefaser (B), die als eine Schutzgruppe am entgegengesetzten Ende fungiert, durch die optische Sendefaser;
wobei der Entscheidungsknoten in der Multiplexsektionsschutzgruppe über Netzwerk-Elemente hinweg ein Knoten ist, der Protokollentscheidungen ausführt und K-Byte mit der Schutzgruppe am entgegengesetzten Ende austauscht, und andere Netzwerk-Elemente als Nicht-Entscheidungsknoten bezeichnet werden.

7. Vorrichtung nach Anspruch 6, wobei
die Störungsverarbeitungseinheit des Weiteren für Folgendes konfiguriert ist:
wenn die Rollenbeurteilungseinheit bestimmt, dass der momentane Knoten der Entscheidungsknoten ist, dann Ausführen einer Schutzumschaltprotokolloperation, Interagieren mit einem Knoten eines gegenüberliegenden Endes durch K-Byte-Informationen in einer Rahmenstruktur, und Veranlassen einer Schutzschaltungsaktion der Multiplexsektionsschutzgruppe.

8. Vorrichtung nach Anspruch 6, wobei
die Störungsverarbeitungseinheit des Weiteren für Folgendes konfiguriert ist:
wenn die Rollenbeurteilungseinheit bestimmt, dass der momentane Knoten der Nicht-Entscheidungsknoten ist und der Zustand der Kommunikationsverbindung zwischen dem momentanen Knoten und der Entscheidungsknoten normal ist, dann Benachrichtigen des Entscheidungsknotens über die Alarminformationen.

9. Vorrichtung nach Anspruch 6 oder 7 oder 8, wobei die Störungsverarbeitungseinheit des Weiteren für Folgendes konfiguriert ist:
wenn Alarminformationen empfangen werden, die durch die Schutzgruppe am entgegengesetzten Ende gesendet wurden, nachdem eine Störung in einer geschützten Multiplexsektion gemäß den Alarminformationen detektiert wurde, Veranlassen eines entgegengesetzten Endes, eine Schutzumschaltprotokollberechnung auszuführen.

10. Vorrichtung nach Anspruch 6 oder 7 oder 8, wobei die Alarminformations-Detektionseinheit dafür konfiguriert ist, die Alarminformationen durch Detektieren von Verwaltungsdatenfeld-Informationen in einer durch ein entgegengesetztes Ende gesendeten Frame-Struktur zu detektieren.

## Revendications

1. Procédé de traitement de défaut de fibre optique unique dans un réseau de hiérarchie numérique synchrone, une fibre optique comprenant une fibre optique de transmission et une fibre optique de réception, **caractérisé en ce qu'**il comprend :
lorsqu'un noeud de non-décision (B) dans un groupe de protection de section de multiplexage à travers des éléments de réseau détecte des informations d'alarme dans la fibre optique de réception qui déclenchent une commutation d'un groupe de protection de section de multiplexage (S302), la détermination si un état d'une liaison de communication entre le noeud de non-décision (B) et un noeud de décision (C) dans le groupe de protection de section de multiplexage à travers des éléments de réseau est normal ou non (S305) ; si la liaison de communication est anormale, la mise en concordance des informations d'alarme avec une extrémité de fibre optique de transmission (A) qui sert de groupe de protection d'extrémité opposée (S306), par l'intermédiaire de la fibre optique de transmission ;
dans lequel le noeud de décision dans le groupe de protection de section de multiplexage à travers des éléments de réseau est un noeud qui prend des décisions de protocole et échange un octet K avec le groupe de protection d'extrémité opposée, et d'autres éléments de réseau sont appelés des noeuds de non-décision.

2. Procédé selon la revendication 1, dans lequel le procédé comprend en outre :
après la détection d'un défaut dans une section de multiplexage protégée en fonction des informations d'alarme, le déclenchement, par le groupe de protection d'extrémité opposée, du noeud de décision dans le groupe de protection de section de multiplexage à travers des éléments de réseau pour effectuer un calcul de protocole de commutation de protection.

3. Procédé selon la revendication 1, dans lequel le procédé comprend en outre :
lorsque le noeud de non-décision qui détecte les informations d'alarme détermine que l'état de la liaison de communication avec le noeud de décision est normal, la notification, au noeud de décision, des informations d'alarme (S307) ;
lors de la réception des informations d'alarme, l'exécution, par le noeud de décision, d'une opération de protocole de commutation de protection.

4. Procédé selon la revendication 1, dans lequel le procédé comprend en outre :
lors de la détection des informations d'alarme qui déclenchent une commutation du groupe de protection de section de multiplexage, par le noeud de décision dans le groupe de protection de section de multiplexage à travers des éléments de réseau, l'exécution d'une opération de protocole de commutation de protection et le déclenchement d'une action de commutation de protection du groupe de protection de section de multiplexage.

5. Procédé selon la revendication 1, 3 ou 4, dans lequel chaque noeud à l'intérieur du groupe de protection de section de multiplexage à travers des éléments de réseau détecte les informations d'alarme par la détection d'informations de champ de surdébit dans une structure de trame envoyée par une extrémité opposée.

6. Appareil de traitement de défaut de fibre optique unique dans un réseau de hiérarchie numérique synchrone, une fibre optique comprenant une fibre optique de transmission et une fibre optique de réception, appliqué à un noeud (B) dans un groupe de protection de section de multiplexage à travers des éléments de réseau, **caractérisé en ce que** l'appareil comprend :
une unité de détection d'informations d'alarme configurée pour la détection d'informations d'alarme dans la fibre optique de réception qui déclenchent une commutation d'un groupe de protection de section de multiplexage ;
une unité de jugement de rôle configurée pour : la détermination si un noeud actuel (B) est un noeud de décision ou un noeud de non-décision dans le groupe de protection de section de multiplexage à travers des éléments de réseau lors de la détection des informations d'alarme qui déclenchent une commutation du groupe de protection de section de multiplexage ; et
une unité de traitement de défaut configurée pour : lorsque l'unité de jugement de rôle détermine que le noeud actuel (B) est le noeud de non-décision, la détermination si un état d'une liaison de communication entre le noeud actuel (B) et le noeud de décision (C) dans le groupe de protection de section de multiplexage à travers des éléments de réseau est normal ou non ; si la liaison de communication est anormale, la mise en concordance des informations d'alarme avec une extrémité de fibre optique de transmission (B) qui sert de groupe de protection d'extrémité opposée, par l'intermédiaire de la fibre optique de transmission ;
dans lequel le noeud de décision dans le groupe de protection de section de multiplexage à travers des éléments de réseau est un noeud qui prend des décisions de protocole et échange un octet K avec le groupe de protection d'extrémité opposée, et d'autres éléments de réseau sont appelés des noeuds de non-décision.

7. Appareil selon la revendication 6, dans lequel
l'unité de traitement de défaut est en outre configurée pour : lorsque l'unité de jugement de rôle détermine que le noeud actuel est le noeud de décision, l'exécution d'une opération de protocole de commutation de protection, l'interaction avec un noeud d'extrémité opposée par l'intermédiaire d'informations d'octet K dans une structure de trame, et le déclenchement d'une action de commutation de protection du groupe de protection de section de multiplexage.

8. Appareil selon la revendication 6, dans lequel
l'unité de traitement de défaut est en outre configurée pour : lorsque l'unité de jugement de rôle détermine que le noeud actuel est le noeud de non-décision et que l'état de la liaison de communication entre le noeud actuel et le noeud de décision est normal, la notification, au noeud de décision, des informations d'alarme.

9. Appareil selon la revendication 6, 7 ou 8, dans lequel
l'unité de traitement de défaut est en outre configurée pour : lors de la réception d'informations d'alarme envoyées par le groupe de protection d'extrémité opposée, après la détection d'un défaut dans une section de multiplexage protégée en fonction des informations d'alarme, le déclenchement d'une extrémité opposée pour effectuer un calcul de protocole de commutation de protection.

10. Appareil selon la revendication 6, 7 ou 8, dans lequel
l'unité de détection d'informations d'alarme est configurée pour la détection des informations d'alarme par la détection d'informations de champ de surdébit dans une structure de trame envoyée par une extrémité opposée.
